# EUROPEAN PATENT SPECIFICATION

(11) **EP 1 956 207 B1**
(45) Date of publication and mention of the grant of the patent: **24.11.2010**
(21) Application number: 08101497.9
(22) Date of filing: 12.02.2008
(51) Int. Cl.: F01N 3/20, B60K 15/00

(54) **Urea tank for transport vehicle, unit comprising a diesel tank and said urea tank**
Harnstofftank für ein Transportfahrzeug, Einheit, die einen Dieseltank und den Harnstofftank umfasst
Réservoir d'urée pour véhicule de transport, unité comprenant un réservoir diesel et ledit réservoir d'urée

(30) Priority: 12.02.2007 FR 0700978
(43) Date of publication of application: 13.08.2008
(73) Proprietor: Iveco France S.A., 69200 Vénissieux (FR)
(72) Inventor: THEVENARD, Jacques, 69300, CALUIRE ET CUIRE (FR); MENIER, Louis, 38780, OYTIER SAINT OBLAS (FR)
(74) Representative: Borsano, Corrado

(56) References cited:
- EP-A- 1 449 702
- EP-A- 1 645 452
- WO-A-2006/045839
- DE-A1- 10 331 395
- DE-U1-202006 013 535
- US-A- 5 944 076
- US-A1- 2003 150 507

## Description

The present invention relates to a urea tank for a transport vehicle, a unit comprising a diesel tank and said urea tank, a transport vehicle comprising said unit, in addition to a mechanism for the simultaneous diesel and urea delivery, for the two aforementioned tanks.

The invention relates more specifically to transport vehicles having a diesel engine, which therefore use diesel as fuel. By way of a non-limitative example, such vehicles could be buses, coaches or even lorry-type vehicles.

Generally, this type of transport vehicle comprises a body mounted on wheels. It is also equipped with a diesel tank, allowing fuel to be supplied to the engine of said vehicle.

For ecological purposes, particularly in light of the EURO 4 regulation, it is now common to mix, among other things, urea with the aforesaid diesel fuel. Thus, said urea, which is stored in a separate tank, is sprayed directly into the exhaust gases of the diesel engine, causing the breakdown of certain noxious pollutants.

An example of a fuel tank integrated with a module containing a fine reduction fluid (urea) is described in the utility patent DE 202006013535.

This having been specified, this invention aims to improve the prior art solutions by associating two tanks of urea and diesel respectively, specifically in terms of maintenance and ease of use.

For this purpose, the object of the invention is a unit comprising a diesel tank and an urea tank for a transport vehicle, specifically a bus or coach, comprising:
- a main body,
- a filling compartment extending upwards from the main body, said filling compartment having a filling hole fitted in its upper part,
- an air entrapment compartment extending upwards from the body, next to the filling compartment,
- said filling compartment and said air entrapment compartment being separated, at their lower ends, by a partition.
- the air entrapment compartment is equipped with a valve suitable to substantially prevent any air from escaping while the tank is being filled with urea, while being suitable to allow said air to be let out when the urea dilates as a result of freezing;

According to further characteristics:
- opposite surfaces of said filling compartment and said air entrapment compartment form an interstitial volume which has a much smaller width than its height;
- the volume of the air entrapment compartment is between 10 and 20% of the overall volume of the tank, specifically in the region of 15%.

A further object of this invention is a unit comprising a diesel tank and a urea tank as described above, the hole of the diesel tank and the hole of the urea tank being placed side by side.

According to further characteristics:
- the diesel tank is equipped with a cradle fastening it to the vehicle's chassis, and the urea tank is equipped with detachable means fastening it to said cradle.
- the detachable fastening means include legs, equipping the urea tank, which are suitable to be joined to the cradle, in particular by means of screws;
- the diesel tank body has a recession for the insertion of the urea tank.

A further object of this invention is a transport vehicle, specifically a bus or coach, comprising a body, a diesel engine, as well as a unit comprising a diesel tank and a urea tank as described above.

According to further characteristics:
- the urea tank is placed in heat exchange with the engine water by means of a coupling line;
- the coupling line is equipped with a solenoid valve suitable to stop the flow of water when the water temperature exceeds a preset level, specifically in the region of 65°C;
- the holes in the two tanks are placed in a housing fitted into the vehicle's body, set back from a side wall of said body;
- the housing is equipped with channelling conduits for a residual volume of diesel and/or of urea, flowing out of the tank(s);
- the channelling conduits comprise a recession provided in the lower part of the housing, as well as a channelling pipe communicating with said recession.

Lastly, a further object of this invention is a device for the simultaneous diesel and urea delivery for a unit comprising a diesel tank and a urea tank, as described above, having a body, two distribution nozzles joined to said body, as well as two conduits suitable to connect each nozzle with a respective source of diesel or urea.

A particular object of the present invention is a unit comprising a diesel tank and an urea tank, a transport vehicle comprising said unit, in addition to a mechanism for the simultaneous diesel and urea delivery, as described in the attached claims, which are considered an integral part of the present description.

The invention will be described below, with reference to the attached drawings, given purely by way of non-limiting example, in which:
- figure 1 is a schematic view illustrating the different relationships between a urea tank, a diesel tank and a diesel engine equipping a transport vehicle according to this invention;
- figure 2A is a perspective view illustrating more precisely a urea tank according to this invention;
- figure 2B is a longitudinal cross-section view, illustrating the filling of said urea tank;
- figure 2C is a longitudinal cross-section view, illustrating the process of freezing of the urea;
- figures 3A to 3C are perspective views from different angles, illustrating a unit according to this invention, comprising a urea tank and a diesel tank;
- figure 4A is a perspective view illustrating the holes in the two tanks in figures 3A to 3C, mounted on a vehicle according to the invention;
- figure 4B is a side view illustrating the same holes; and
- figure 5 is a perspective view illustrating a fuel delivery device according to this invention.

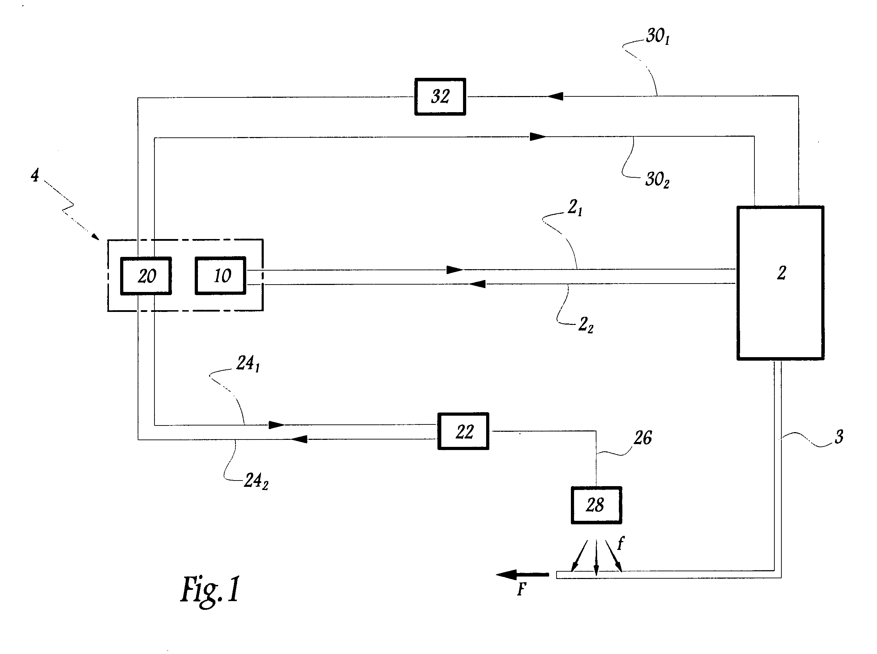

Figure 1 illustrates the fluidic relationships existing between various devices, which shall be described below, equipping a transport vehicle which is for example a coach or bus. Thus, in said figure 1, there is a diesel engine 2, as well as a unit 4 comprising a diesel tank 10 as well as a urea tank 20.

Typically, the engine 2 and the diesel tank 10 are joined by two ducts 2₁ and 2₂ for the supply and return of the diesel. Moreover, the urea tank is joined, also in a known manner, to a pump 22. For this purpose, two respective supply and return lines 24₁ and 24₂ connect said tank to said pump. The latter is connected, by means of a conduit 26, to a metering valve 28, which itself is connected to an atomiser which is not illustrated, to allow the urea to be sprayed into the exhaust gases.

For this purpose, the exhaust pipe is numbered 3, while the spraying operation is indicated schematically by the arrows f. Thus, following this operation, which is of a known type, exhaust gases with a reduced pollutant content are discharged into the atmosphere in the direction of arrow F.

Furthermore, the engine 2 and the urea tank 20 are joined by two ducts 30₁ and 30₂, ensuring the circulation of the hot water from the engine. Said hot water is suitable to circulate in a coil (not illustrated), equipping the urea tank 20.

Also included is a solenoid valve 32 on the duct 30₁, ensuring the arrival of hot water from the engine in the tank direction. As will be seen in more detail below, said solenoid valve is adapted to stop the inflow of said hot water when the temperature thereof reaches a preset value.

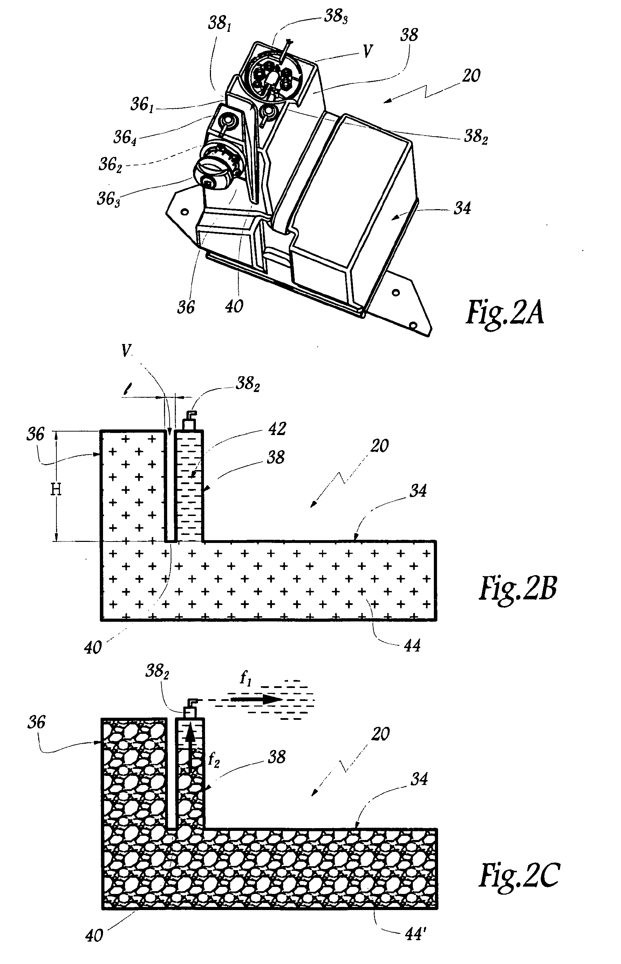

Figures 2A to 2C illustrate in greater detail the urea tank 20 described above. For example, it may be made from rotomoulded plastic material, particularly material such as polyethylene.

Said tank 20 comprises a main body 34, arranged in a lower area, from which two upper compartments 36 and 38 extend, one next to the other. Said two compartments 36 and 38 are separated, at their lower end, by a partition 40. In other words, the opposite surfaces 36₁ et 38₁ of said two compartments define an interstitial volume V, the height H of which is much greater than its width l.

Compartment 36, which is to be filled with urea, is equipped with an upper hole 36₂, joined to a cap 36₃, in a known manner. There is also a valve 36₄ which has the function of ensuring that the tank is neither pressurized nor depressurized.

The second compartment 38, used for air entrapment as shall be seen below, is equipped with a valve 38₂, which is for example like those marketed by the company DELTA COMPONENT. Said valve is such that it will not let air escape outside of the tank when there is a sharp rise in pressure inside the tank, arising particularly upon filling with urea. On the other hand, when the pressure is gradually increased or decreased inside said tank, said valve is suitable to allow air to escape outside the tank.

Lastly, compartment 38 is equipped with a level gauge 38₃, of a known type. The function of said gauge is to provide an indication of the level of urea inside the tank, through the level indicator on the instrument panel, as well as ensuring heating through the coil.

The urea tank 20 embodiment, as described above, shall now be explained in more detail.

Let us firstly recall that urea has a freezing point of around -11°C, so that it has an inherent risk of freezing in use. During refilling, the corresponding nozzle is placed into the hole 36₂, provided in the upper section of the compartment 36, so that the urea flows into the main body 34 of the tank 20. Due to the presence of the partition 40, urea does not rise up significantly into the second compartment 38.

In these conditions, as illustrated in figure 2B, an air pocket 42 is formed within said compartment 38, once urea has been refilled, forming a liquid volume 44. The presence of air thus causes counter pressure which stops the urea supply, by means of a delivery device of the nozzle type. It will also be noted that, during this filling operation, the valve 38₂ has prevented air from escaping outside the volume of the tank 20.

In extremely cold weather, leading to the partial freezing at least of the urea stored in the tank 20, urea solidifies and its volume 44' increases gradually, resulting in a slow rise in pressure inside the tank. As a result of this, as mentioned above, the valve 38₂ allows air to escape, outside the tank, following arrow f₁ in figure 2C, while the urea volume 44' gradually fills up the air entrapment compartment 38, following arrow f₂.

In these conditions, urea is free to occupy at least part of the second compartment 38, without causing deformation or even explosion of the tank 20. Note that the compartment 38 is of an adequate size to ensure the entrapment of an air volume of around 15% of the total volume of the tank 20, in the case of fully liquid urea.

If we suppose that the urea in tank 20 has frozen at least partially, it is possible to heat up urea by means of the engine. Thus, with reference to figure 1, firstly the engine must be started, so as to increase water temperature. In these conditions, said circulation water through ducts 30₁ et 30₂ allows the temperature of urea to rise, so that it once again becomes fully liquid.

This then allows the vehicle to be started up, along with the depollution of its exhaust gases. Also note that the presence of the solenoid valve 32 is advantageous. Indeed, it is adapted to stop the flow of hot water in the direction of the tank, if the water temperature is for example above 65°C, preventing urea from degrading, specifically into ammonia.

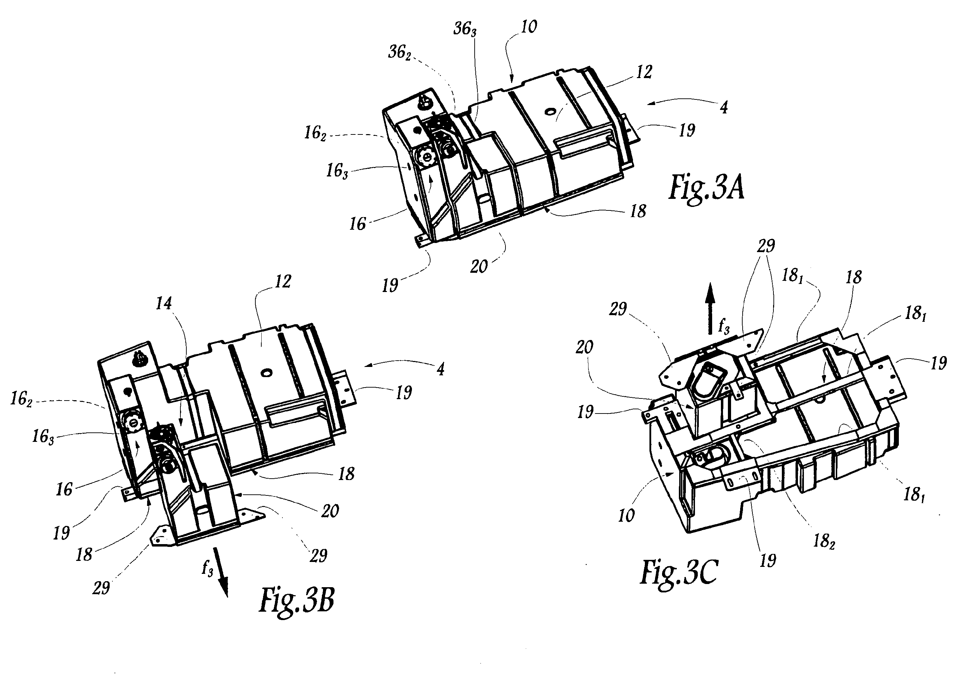

Figures 3A to 3C are more detailed illustrations of unit 4 comprising the diesel tank 10 and the urea tank 20. Said diesel tank, which is considerably larger than the urea tank 20, has a main body 12, which has a recess 14 allowing the urea tank 20 to be inserted. Said body 20 is extended by an upper compartment 16, having a hole 16₂ as well as a cap 16₃, placed next to those 36₂ and 36₃ equipping the urea tank 20.

The diesel tank 10 rests on a cradle 18 (figure 3C), allowing the tank to be fixed onto a vehicle chassis. Said cradle 18 comprises several sills 18₁ and a number of cross members 18₂, and has several legs 19, to be fastened onto the chassis, specifically by means of screws.

Moreover, the urea tank 20 is equipped with its own fastening legs 29, allowing it to be joined to the cradle 18 of the diesel tank 10. Therefore, the urea tank 20 is mounted in a detachable manner onto the cradle 18, which itself allows the diesel tank 10 to be fastened in a detachable manner onto the vehicle chassis.

In these conditions, it is possible to easily detach the urea tank 20 from the diesel tank 10, without however disassembling the latter from the vehicle chassis. This detachment is illustrated in figures 3B and 3C, the movement of the tank 20 being illustrated by arrow f₃.

An operator is thus able to separately manipulate the urea tank 20, which is practical in terms of its reduced volume and weight. Lastly, said operator replaces the urea tank 20 into the recess 14, so that the unit 4 formed by the two tanks 10 and 20 once again forms a solid block, as shown in figure 3A.

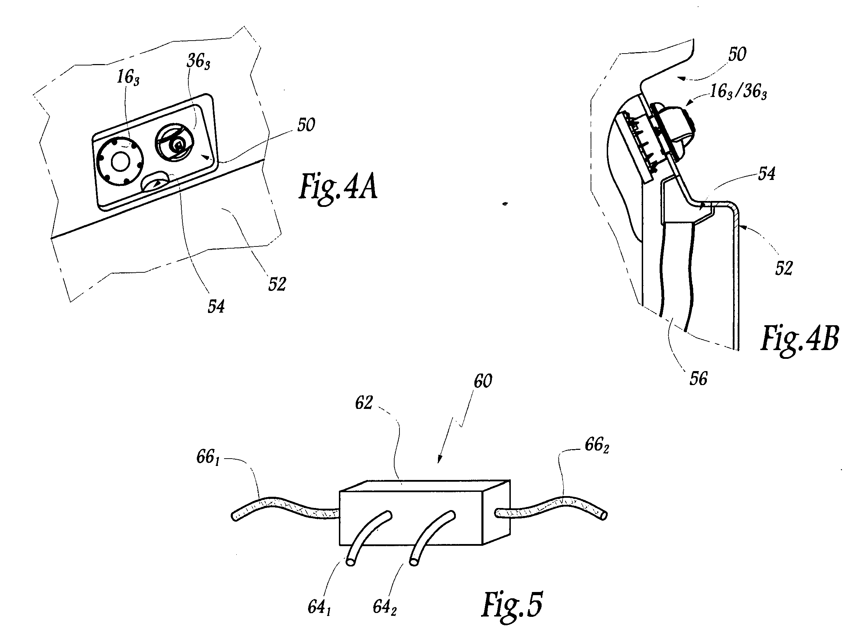

Figures 4A and 4B illustrate the unit 4 once it has been assembled in the vehicle. Thus we can see the caps 16₃ and 36₃, placed side by side, which are held in a housing 50, which is recessed into a side wall 52 of the body of the vehicle. In these conditions, said caps 16₃ and 36₃ do not protrude beyond said wall 52, which is advantageous in terms of safety, especially with regard to pedestrians and cyclists.

In the lower part of the housing 50, the latter is indented with a recession 54, which is joined to a pipe 56 extending along the wall 52, inside the latter. Therefore, said pipe 56 is not significantly visible on the outside.

When the tanks 10 and 20 are filled, diesel and/or urea is likely to spill outside the inner volume of the tank. This residual volume of fuel is then channelled by gravity towards the recession 54, and then runs into the pipe 56. In these conditions, this residual fuel does not flow noticeably onto the visible part of the body, which is advantageous in aesthetic terms.

Figure 5 shows a simultaneous fuel delivery device, designated in its entirety by number 60, which allows the two tanks 10 and 20 to be refilled during the same operation. For this purpose, said device 60 is equipped with a body 62, which holds two distribution nozzles 64₁ and 64₂.

Furthermore, there are two tubes 66₁ and 66₂, each of which runs between a fuel source, of diesel or urea respectively, as well as a corresponding nozzle 64₁ or 64₂. It will also be noted that the distance separating these two nozzles 64₁ and 64₂ is the same distance as that between the two holes 16₂ and 36₂.

Therefore, thanks to the use of this delivery device 60, the two tanks can be filled by means of a single filling operation. This allows considerable time savings, which is advantageous particularly with a view to automating this stage of refuelling.

## Claims

1. Unit comprising a diesel tank and an urea tank (20) for a transport vehicle, specifically a bus or coach, wherein said urea tank comprises:
- a main body (34),
- a filling compartment (36) extending upwards from the main body, said filling compartment having a filling hole (36₂) fitted in its upper part,
- an air entrapment compartment (38), extending upwards from the body (34), next to the filling compartment (36),
- said filling compartment (36) and said air entrapment compartment (38) being separated, at their lower ends, by a partition (40);
wherein the air entrapment compartment (38) is equipped with a valve (38₂) adapted to significantly prevent any air escaping while the tank is filled with urea, while being suitable to allow said air to escape when the urea dilates due to freezing.

2. Unit according to claim 1, wherein the opposite surfaces (36₁, 38₁) of said filling compartment (36) and said air entrapment compartment (38) define an interstitial volume (V) which has a much smaller width (1) than its height (H).

3. Unit according to any of the previous claims, wherein the volume of the air entrapment compartment (38) is between 10 and 20% of the overall volume of the tank (20), specifically in the region of 15%.

4. Unit (4) according to any of the previous claims, wherein the filling hole (16₂) of the diesel tank (10) and the filling hole (36₂) of the urea tank (20) being placed side by side.

5. Unit according to claim 4, wherein said diesel tank (10) is equipped with a cradle (18) to fasten it to the chassis of the vehicle, and the urea tank (20) is equipped with means (29) by which it can be detachably fastened onto the cradle (18).

6. Unit according to claim 5, wherein the detachable fastening means include legs (29) equipping the urea tank (20), which are suitable to be fastened onto the cradle (18), specifically by means of screws.

7. Unit according to any one of claims 4 to 6, wherein the body (12) of the diesel tank (10) is indented with a recess (14) to allow the urea tank (20) to be inserted.

8. Transport vehicle, specifically a bus or coach, comprising a body, a diesel engine, as well as a unit according to any one of claims 1 to 7.

9. Transport vehicle according to claim 8, **characterised in that** the urea tank (10) is placed in heat exchange with the engine water by means of at least one coupling line (30₁, 30₂) .

10. Transport vehicle according to claim 9, **characterised in that** the coupling line (30₁, 30₂) is equipped with a solenoid valve (32) adapted to stop the flow of water when the water temperature exceeds a pre-set value, specifically in the region of 65°C.

11. Transport vehicle according to one of claims 8 to 10, **characterised in that** the filling holes (16₂, 36₂) of the two tanks (10, 20) are placed in a housing (50) arranged in the vehicle's body, set back from a side wall (52) of said body.

12. Transport vehicle according to claim 11, **characterised in that** the housing (50) is equipped with channelling conduits for a residual volume of diesel and/or urea flowing out of the tank or tanks.

13. Transport vehicle according to claim 12, **characterised in that** the channelling conduits comprise a recession (54) placed in the lower part of the housing (50), as well as an evacuating pipe (56) communicating with said recession.

14. Simultaneous diesel and urea delivery device for a unit according to any one of claims 4 to 7, comprising a body (62), two distribution nozzles (64₁, 64₂), joined to said body, as well as two ducts (66₁, 66₂) suitable to connect each nozzle with a source of diesel or urea respectively.

## Patentansprüche

1. Einheit, umfassend einen Dieseltank und einen Harnstoff-Tank (20) für ein Transport-Fahrzeug, speziell für einen Bus oder einen Reisebus, worin der Harnstoff-Tank umfasst:
- einen Hauptkörper (34);
- eine Füllkammer (36), die sich nach oben gerichtet von dem Hauptkörper erstreckt, wobei die Füllkammer ein Füllloch (36₂) aufweist, das in deren oberen Teil eingepasst ist;
- eine Luft-Einschluss-Kammer (38), die sich nach oben gerichtet von dem Körper (34) benachbart der Füllkammer (36) erstreckt;
- wobei die Füllkammer (36) und die Luft-Einschluss-Kammer (38) an ihren unteren Enden durch eine Abtrennung (40) getrennt sind;
- worin die Luft-Einschluss-Kammer (38) mit einem Ventil (38₂) ausgestattet ist, das dafür angepasst ist, signifikant zu verhindern, dass irgendwelche Luft austritt, während der Tank mit Harnstoff befüllt wird, während es geeignet ist, zu ermöglichen, dass die Luft austritt, wenn sich der Harnstoff aufgrund von Frieren ausdehnt.

2. Einheit nach Anspruch 1, worin die einander gegenüberliegenden Flächen (36₁, 38₁) der Füllkammer (36) und der Luft-Einschluss-Kammer (38) ein interstitielles Volumen (V) definieren, das eine viel kleinere Breite (1) als seine Höhe (H) hat.

3. Einheit nach irgendeinem der vorangehenden Ansprüche, worin das Volumen der Luft-Einschluss-Kammer (38) zwischen 10 und 20 % des Gesamtvolumens des Tanks (20) ist, speziell im Bereich von 15 %.

4. Einheit (4) nach irgendeinem der vorangehenden Ansprüche, worin das Füllloch (16₂) des Dieseltanks (10) und das Füllloch (36₂) des Harnstoff-Tanks (20) Seite an Seite angeordnet sind.

5. Einheit nach Anspruch 4, worin der Dieseltank (10) mit einem Gestell (18) ausgerüstet ist, um ihn am Chassis des Fahrzeugs zu befestigen, und der Harnstoff-Tank (20) mit Einrichtungen (29) ausgerüstet ist, mit denen er demontierbar an dem Gestell (18) befestigt werden kann.

6. Einheit nach Anspruch 5, worin die demontierbaren Befestigungseinrichtungen den Harnstoff-Tank (20) ausrüstende Abschnitte (29) einschließen, die dafür geeignet sind, an dem Gestell (18) befestigt zu werden, speziell mittels Schrauben.

7. Einheit nach irgendeinem der Ansprüche 4 bis 6, worin der Körper (12) des Dieseltanks (10) mit einer Ausnehmung (14) eingekerbt ist, um zu ermöglichen, dass der Harnstoff-Tank (20) eingesetzt wird.

8. Transportfahrzeug, speziell Bus oder Reisebus, umfassend einen Körper, einen Dieselmotor sowie eine Einheit nach irgendeinem der Ansprüche 1 bis 7.

9. Transportfahrzeug nach Anspruch 8, **dadurch gekennzeichnet, dass** der Harnstoff-Tank (10) in Wärmeaustausch mit dem Motor-Wasser mittels wenigstens einer Verbindungsleitung (30₁, 30₂) angeordnet ist.

10. Transportfahrzeug nach Anspruch 9, **dadurch gekennzeichnet, dass** die Verbindungsleitung (30₁, 30₂) mit einem Solenoid-Ventil (32) ausgerüstet ist, das dafür angepasst ist, den Wasserstrom zu stoppen, wenn die Wassertemperatur einen voreingestellten Wert übersteigt, speziell im Bereich von 65 °C.

11. Transportfahrzeug nach irgendeinem der Ansprüche 8 bis 10, **dadurch gekennzeichnet, dass** die Fülllöcher (16₂, 36₂) der beiden Tanks (10, 20) in einem Gehäuse (50) angeordnet sind, das in dem Fahrzeugkörper angeordnet ist, und zwar zurückgesetzt von einer Seitenwand (52) des Körpers.

12. Transportfahrzeug nach Anspruch 11, **dadurch gekennzeichnet, dass** das Gehäuse (50) mit Kanalisierungsleitungen für ein Restvolumen an Diesel und/oder Harnstoff ausgerüstet ist, das/die aus dem Tank oder den Tanks ausströmt/ausströmen.

13. Transportfahrzeug nach Anspruch 12, **dadurch gekennzeichnet, dass** die Kanalisierungsleitungen einen eine Ausnehmung (54) umfassen, die im unteren Teil des Gehäuses (50) angeordnet ist, sowie eine Evakuierungs-Leitung (56), die mit der Ausnehmung in Verbindung steht.

14. Vorrichtung zum gleichzeitigen Abgeben von Diesel und Harnstoff für eine Einheit nach irgendeinem der Ansprüche 4 bis 7, umfassend einen Körper (62), zwei Verteilungsdüsen (64₁, 64₂), die mit dem Körper verbunden sind, sowie zwei Leitungen (66₁, 66₂), die geeignet dafür sind, jede Düse mit einer Quelle für Diesel bzw. Harnstoff zu verbinden.

## Revendications

1. Unité comprenant un réservoir à carburant diesel et un réservoir à urée (20) destinée à un véhicule de transport, et plus particulièrement à un bus ou à une voiture, dans laquelle ledit réservoir à urée comprend :
- un corps principal (34),
- un compartiment de remplissage (36) qui s'étend vers le haut depuis le corps principal, ledit compartiment de remplissage ayant un orifice de remplissage (36₂) en sa partie supérieure,
- un compartiment de piégeage de l'air (38), qui s'étend vers le haut depuis le corps (34), près du compartiment de remplissage (36),
- ledit compartiment de remplissage (36) et ledit compartiment de piégeage de l'air (38) étant séparés, au niveau de leurs extrémités inférieures, par une partition (40) ;
dans laquelle le compartiment de piégeage de l'air (38) est équipé d'une soupape (38₂) adaptée pour empêcher de manière significative l'air de s'échapper pendant que le réservoir est rempli d'urée, tout en laissant ledit air s'échapper lorsque l'urée se dilate à cause du gel.

2. Unité selon la revendication 1, dans laquelle les surfaces opposées (36₁, 38₁) dudit compartiment de remplissage (36) et dudit compartiment de piégeage de l'air (38) définissent un volume interstitiel (V) qui possède une largeur (1) bien inférieure à sa hauteur (H).

3. Unité selon l'une quelconque des revendications précédentes, dans laquelle le volume du compartiment de piégeage de l'air (38) est de l'ordre de 10 à 20 % du volume total du réservoir (20), et plus particulièrement de l'ordre de 15 %.

4. Unité (4) selon l'une quelconque des revendications précédentes, dans lequel l'orifice de remplissage (16₂) du réservoir à carburant diesel (10) et l'orifice de remplissage (36₂) du réservoir à urée (20) sont placés côte à côte.

5. Unité selon la revendication 4, dans laquelle ledit réservoir à carburant diesel (10) est équipé d'un berceau (18) qui permet de le fixer sur le châssis du véhicule, et le réservoir à urée (20) est équipé d'un moyen (29) grâce auquel il peut être fixé de manière amovible sur le berceau (18).

6. Unité selon la revendication 5, dans laquelle le moyen de fixation amovible comprend des pattes (29) qui équipent le réservoir à urée (20), et qui peuvent être fixées sur le berceau (18), plus particulièrement à l'aide de vis.

7. Unité selon l'une quelconque des revendications 4 à 6, dans laquelle le corps (12) du réservoir à carburant diesel (10) est muni d'un renfoncement (14) afin de pouvoir insérer le réservoir à urée (20).

8. Véhicule de transport, et plus particulièrement un bus ou une voiture, comprenant un corps, un moteur diesel, ainsi qu'une unité selon l'une quelconque des revendications 1 à 7.

9. Véhicule de transport selon la revendication 8, **caractérisé en ce que** le réservoir à urée (10) est placé en échange thermique avec l'eau du moteur à l'aide d'au moins une conduite de raccordement (30₁, 30₂).

10. Véhicule de transport selon la revendication 9, **caractérisé en ce que** la conduite de raccordement (30₁, 30₂) est équipée d'une électrovanne (32) adaptée pour arrêter l'écoulement d'eau dès que la température de l'eau dépasse une valeur prédéfinie, plus particulièrement de l'ordre de 65 °C.

11. Véhicule de transport selon l'une des revendications 8 à 10, **caractérisé en ce que** les orifices de remplissage (16₂, 36₂) des deux réservoirs (10, 20) sont placés dans un logement (50) disposé dans le corps du véhicule, en regard d'une paroi latérale (52) dudit corps.

12. Véhicule de transport selon la revendication 11, **caractérisé en ce que** le logement (50) est équipé de conduits destinés à un volume résiduel de carburant diesel et/ou d'urée qui s'échappe du ou des réservoir(s).

13. Véhicule de transport selon la revendication 12, **caractérisé en ce que** les conduits comprennent un renfoncement (54) placé dans la partie inférieure du logement (50), ainsi qu'un tuyau d'évacuation (56) qui communique avec ledit renfoncement.

14. Dispositif d'approvisionnement simultané en carburant diesel et en urée destiné à une unité selon l'une quelconque des revendications 4 à 7, comprenant un corps (62), deux buses de distribution (64₁, 64₂) reliées audit corps, ainsi que deux conduites (66₁, 66₂) qui relient chaque buse à une source de carburant diesel ou d'urée, respectivement.
